Europäisches Patentamt

European Patent Office

Office européen des brevets

(11) Publication number: **0 420 825 A2**

(12) # EUROPEAN PATENT APPLICATION

(21) Application number: 90830405.8

(22) Date of filing: 18.09.90

(51) Int. Cl.5: **G10L 5/06**

(30) Priority: 26.09.89 IT 6779489

(43) Date of publication of application:
03.04.91 Bulletin 91/14

(84) Designated Contracting States:
**DE ES FR GB NL**

(71) Applicant: **Ing. C. Olivetti & C., S.p.A.**
**Via G. Jervis 77**
**I-10015 Ivrea (Torino)(IT)**

(72) Inventor: **Vittorelli, Vittore**
**Corso Vittorio Emanuele II, 162**
**I-10136 Torino(IT)**

(74) Representative: **Quinterno, Giuseppe et al**
**c/o Jacobacci-Casetta & Perani S.p.A. Via**
**Alfieri, 17**
**I-10121 Torino(IT)**

(54) **A method and equipment for recognising isolated words, particularly for very large vocabularies.**

(57) The method includes the preliminary steps of:
determining and storing, for each word in the vocabulary, at least one corresponding "phonetic model" constituted by a sequence of phonetic symbols corresponding to the phonemes of the word; and
determining and storing, for a limited set of basic phonemes or "prototypes" spoken by the speaker, the associated values assumed by predetermined characteristic parameters indicative of the energy and spectral composition of that phoneme.

Each time it is carried out, the method then includes the steps of:
generating an electrical sound signal corresponding to each isolated word spoken by the speaker;
sampling the electrical sound signal and determining the values assumed by the characteristic parameters for each sample,
for each sample, comparing the corresponding values of the characteristic parameters with the previously-stored values of the same parameters of the basic phonemes or "prototypes";
determining, on the basis of this comparison, a sequence or "string" of phonetic symbols constituting an approximate representation of the phonemes contained in the isolated word spoken, and
comparing the phonetic "string" with all the phonetic "models" of the vocabulary and selecting, by means of a dynamic programming algorithm, a small number of models ("candidate" models) whose characteristics best correspond to those of the "string".

FIG. 1

# A METHOD AND EQUIPMENT FOR RECOGNISING ISOLATED WORDS, PARTICULARLY FOR VERY LARGE VOCABULARIES

The present invention relates to a method and equipment for recognising isolated words spoken by a speaker, particularly for very large vocabularies, that is vocabularies in which the number of words is of the order of $10^4$ or more.

The invention relates in particular to a method and equipment of the type defined in English terminology as "speaker-dependent". In these systems, recognition is based on a comparison of the unknown word input with data derived from words spoken beforehand by the same speaker.

In such systems for the recognition of a limited vocabulary, the speaker is made to pronounce all the words in the vocabulary beforehand. Each word is sampled finely and, for each sample "frame", the values of predetermined characteristic parameters indicative, for example, of its energy and spectral composition, are stored. An unknown word is then recognised by the sequential comparison of the parameters relating to the individual samples or frames of the unknown word with the corresponding values of the parameters of the samples or frames of all the words in the vocabulary.

This technique cannot conveniently be applied to very large vocabularies since it requires enormous memory resources and very long processing times as well as considerable lengths of time for training the system.

The object of the present invention is, therefore, to provide a more convenient method of recognising isolated words, that is, a method which requires the availability of fewer memory devices and shorter training, processing and calculation times so that it can be used to advantage even for very large vocabularies.

According to the invention, this object is achieved by means of a recognition method including the preliminary steps of

determining and storing, for each word in the vocabulary, at least one corresponding "phonetic model" constituted by a sequence of phonetic symbols of a pre-defined phonetic alphabet, corresponding to the phonemes of the word;

determining and storing, for each of a predetermined limited set of basic phonemes or "phototypes" spoken by the speaker, the associated values assumed by predetermined characteristic parameters indicative of the energy and spectral composition of that phoneme;

each time it is carried out, the method then includes the steps of:

generating an electrical signal corresponding to each isolated word spoken by the speaker;

sampling the electrical signal and determining the values assumed by the characteristic parameters for each sample,

comparing the corresponding values of the characteristic parameters of each sample with the previously-stored values of the basic phonemes or "prototypes",

determining, on the basis of this comparison, a sequence or "string" of phonetic symbols constituting an approximate representation (optimised according to a predetermined criterion) of the phonemes contained in the isolated word spoken, and

comparing the phonetic string with all the phonetic "models" of the vocabulary and selecting, by means of a dynamic programming algorithm, a small number of models ("candidate" models) whose characteristics best correspond to those of the "string".

A further reduced number of candidate models, which are closer to the unknown word, can then be selected by a more exacting phonetic analysis based on a new comparison between the characteristics of the "candidate" models and the phonetic parameters relating to the unknown word.

Conveniently, according to a further characteristic, the dynamic programming algorithm used for the selection of the "candidate" models is an algorithm which, when applied to the phonetic symbols of the "string" and of each "model", is adapted to determine the best match between two sequences of symbols (Dynamic Warping).

The "string" of phonetic symbols corresponding to the unknown word is compared, by means of such a dynamic programming algorithm, with the previously-determined and stored symbolic representations of all the words in the vocabulary.

It should be noted that the pronunciation of each word can be described fully by a small number of phonetic symbols so that the storage of the symbolic representations, or "models", of a whole vocabulary requires an acceptable number of memory devices. Moreover, the systematic comparison of the unknown string with all the models stored can also be achieved within a short time and, by virtue of certain measures, within times comparable with the average duration of the spoken words and/or the intervals of silence between them.

The invention also relates to corresponding equipment for recognising isolated words, whose characteristics are defined in the appended claims.

Further characteristics and advantages of the invention will become clearer from the detailed description which follows, given by way of non-limiting example, with reference to the appended drawings, in which

Figure 1 is a flow chart showing, in outline, the sequence of steps or stages in the procedure or method according to the invention,

Figure 2 is a block diagram of the general structure of equipment for carrying out the invention with the use of a personal computer;

Figure 3 is an orthogonal grid illustrating a dynamic programming algorithm used in the equipment of Figure 2;

Figure 4 is a block diagram showing the structure of part of a processing system for putting into effect the algorithm to which Figure 3 refers;

Figure 5 is an orthogonal grid similar to that of Figure 3 illustrating the manner in which that part of the processing system shown in Figure 4 operates,

Figure 6 is an orthogonal grid similar to that of Figure 5;

Figure 7 is a block diagram which relates to the general structure of equipment for carrying out the invention with the use of a personal computer;

Figure 8 is a partial diagram showing the structure of a system with two processing units for putting the algorithm into effect in the manner shown in Figure 5, and

Figure 9 is a block diagram which illustrates the structure of one of the processors of the system of Figure 8 in greater detail,

Figure 10 is a block diagram showing the structure of memory devices with two shift registers used in the system according to Figure 7.

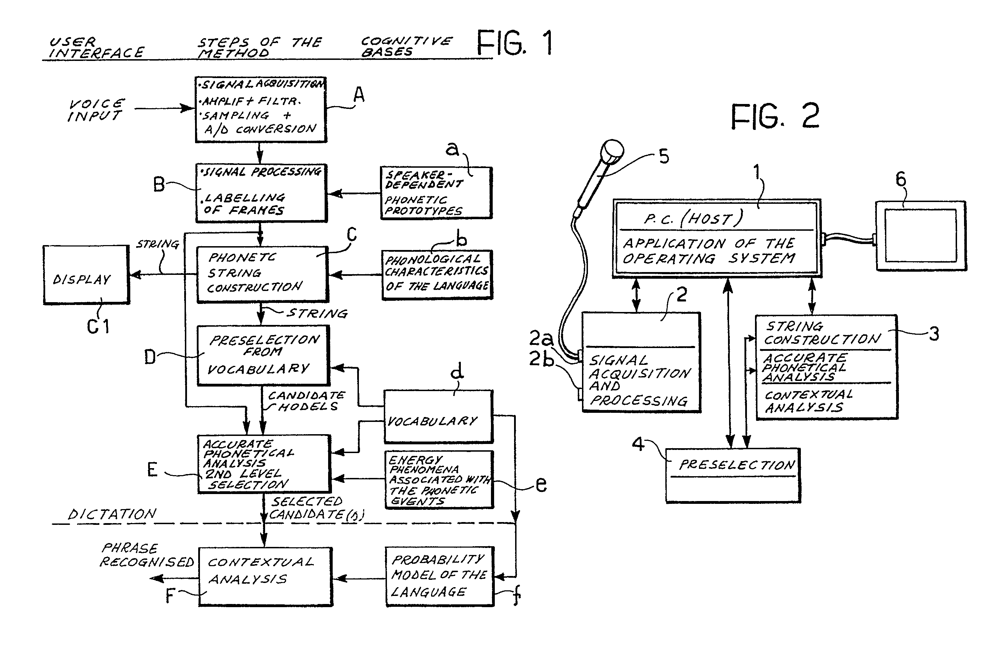

Each time the phonetic recognition method of the invention is carried out, it includes a certain sequence of steps which is represented schematically by the blocks A-F in the flow chart of Figure 1. The method further provides for the preliminary acquisition of certain sets of information and data (or cognitive bases), indicated by the blocks a-f in Figure 1. These data or cognitive bases are used in the method, as will be described more clearly below.

The method provides initially (block A) for the acquisition, by means of a microphone, of an electrical signal representative of a word spoken by the speaker. In this step, the electrical signal acquired is amplified, filtered, sampled, converted into digital form and stored.

In the next step (block B), the digital signals previously acquired are processed appropriately: for each sample or frame of the signal relating to the unknown word, the values assumed by predetermined characteristic parameters indicative of its energy and its spectral composition are determined and stored. This is achieved by the application of now conventional techniques of linear prediction analysis LPC and spectral analysis.

The frames of the unknown word are recognised and "labelled" by a comparison of the values of the characteristic parameters of the individual samples or frames of the unknown word with the values (previously stored: block a ) of a predetermined, limited set of basic phonemes or prototypes spoken by the speaker.

In the next step (block C), the individual frames of the unknown word are analysed on the basis of predetermined rules and phonological properties of the language (block b ) and a sequence or "string" of phonetic symbols is constructed which constitutes an approximate representation of the phonemes contained in the unknown word. The phonetic symbols in question belong to a predefined phonetic alphabet, for example the alphabet of the International Phonetic Association.

A graphic representation of the string thus constructed can be given (block 1), for example on a CRT screen.

In the next step (block D), which will be termed the preselection step below, the phonetic string is compared with the phonemic representation of all the words in the vocabulary (block d). This phonemic representation is determined and stored in advance: for each word in the vocabulary, there is stored at least one corresponding "phonetic model" constituted by a sequence of phonetic symbols corresponding to the phonemes of the word. The phonetic symbols corresponding to the or a phonetic model of a word can be determined by rules from a written representation of the word or may be derived from pre-existing sources such as, for example, conventional printed dictionaries.

As will be explained further below, the selection of the phonetic models whose characteristics best correspond to those of the unknown string involves the calculation, by the repeated application of a recursive dynamic programming algorithm, of a measurement or set of points called a "score" in English terminology, relating to the differences between the unknown string and each model. In particular, this difference measure or score is calculated by a programming algorithm similar to that described, for example, in the article by H. Sakoe and S. Chiba, "Dynamic programming optimization for spoken word recognition", IEE Trans. Acoust., Speech Signal Processing, Vol. ASSP-26, pp. 43-49, February 1978, and in U.S. patent No. 4,384,273.

The preselection step described above enables a small number of "candidate" models to be extracted: for example, if the vocabulary (block d ) consists of 60,000-100,000 words, it is possible, with the method described above, to arrive at a number of "candidate" models of the order of 10-100.

The "candidate" models are then subjected (block E) to a further and more exacting phonetic analysis. In this step, for each candidate, the best match between the phoneme string stored in the vocabulary and the parametric description of the vocal signal is sought. For this purpose an objective function is defined, that is, a probability score based on multiple observations: for each phoneme associated with a certain portion of the word, the spacing of the corresponding spectral prototype, its duration and the characteristics of its energy curve are measured. Each measurement is compared with a histogram determined previously with reference to a vocal data-base representative of a plurality of speakers. With this type of information, the amount of data which must be obtained during the "prototype" definition step (block a), that is, during the "training" of the system, can conveniently be reduced.

The accurate phonetic analysis referred to in block E achieves a further drastic reduction in the number of "candidate" models. This number may be reduced, for example, to 1-5. The final candidate whose characteristics best correspond to those of the unknown string can then be determined (block F) by contextual linguistic analysis (by known techniques) based on a probability model of the language (block f), for example of the Markoviano type. This model is based, for example, on the positional characteristics of grammatical classes in the language under examination, on other grammatical rules and on the frequency with which the words occur in the context.

Equipment developed for carrying out the method outlined above with reference to Figure 1 will now be described with reference to Figure 2. The embodiment in question is based on the use of an MS-DOS personal computer.

The equipment in question comprises, essentially, a personal computer 1 which acts as the "host" computer and is provided with a series of dedicated boards indicated 2 to 4 in Figure 2.

The host computer may, for example, be an Olivetti M280 or M380. The boards 2 to 4 represent hardware modules to which software modules are allocated for carrying out the steps of the method described above.

In an embodiment set up by the Applicant, the board 2 is based on an ADSP-2100 processor operating at 8 MHz and having an input connector 2a for connection to a microphone 5 and an output connector 2b for the possible connection of a loud speaker.

The board 2 is intended to carry out the steps indicated by the blocks A and B in Figure 1 and for this purpose, it comprises:
- am amplifier for amplifying the signal from the microphone 5,
- an anti-aliasing filter, for example of the type with 9 poles;
- "sample and hold" devices operating, for example, at a sampling frequency of 16 KHz.
- an analog/digital converter, for example a 12-bit converter,
- a FIFO buffer; and
- the processor and associated RAM and ROM memory devices.

The string of phonetic symbols corresponding to the unknown word is, however, constructed (step C in the chart of Figure 1) by the board 3 of Figure 2. This board is, for example, a "Humming Board", that is, a commercially-available product (the "Humming Board" and its operating system OS/x86 are produced by A.I ARCHITECTS Inc., Cambridge MA, USA). This board is based on an Intel 80386 microprocessor with 6 Mbytes of RAM memory.

A software module for generating or forming a string of phonemes is allocated to the board 3 and transforms a string of labelled frames into the "string" which is used for the subsequent preselection step.

The preselection step (block D in Figure 1) is carried out by the board 4. This board, whose details will be described more fully below, is formed from "gate array" components. The board 4 thus carries out the preselection by comparing the unknown phonetic string with the models of all the words stored in its memories. In the manner which will be described in more detail below, the devices of the board 4 calculate a point score or measure of the differences between the unknown string and each model and the best "candidates" are selected on the basis of this measure or score.

The measure or score associated with each model of the vocabulary is calculated by a programming algorithm according to a predetermined function which depends in general on
- the probability of the substitution or mistaking ("confusion") of one phonetic symbol for another,
- the probability of the omission or loss ("cancellation") of each phonetic symbol; and
- the probability of the spurious addition of each phonetic symbol.

These probabilities are determined beforehand on the basis of a survey of the statistical frequency with which a phonetic symbol is confused with each of the other phonetic symbols, and of the chances of the omission or spurious addition of a phonetic symbol. The statistical frequency of these events is determined by known techniques for the vocabulary of a predefined data-base.

The probabilities of the events mentioned above are thus stored beforehand in memories and recalled, as will become clearer from the following, during the use of the algorithm to assign a difference score, with respect to the unknown phonetic string, to each model of the vocabulary.

The "candidate" models, of which there may, for example, be 20, are then subjected to precise phonetic analysis (step E in the chart of Figure 1), once more by the board 3 of Figure 2. For this purpose, a suitable software module is allocated to the board 3 for selecting a smaller group of (for example 1-5) candidates from the candidate models.

A further software module is also allocated to the board 3 of Figure 2 for effecting the contextual analysis (step F in the chart of Figure 1) based on a probability model of the language.

Finally, the equipment of Figure 2 includes a display device 6, conveniently constituted by the screen of the personal computer 1, for displaying a set of data useful to the speaker using the system to enable him to understand the causes of any error in recognition by the equipment, for example in the manner described in prior Italian patent application 68302-A/82 in the name of the same Applicant.

The comparison and preselection procedure carried out by the board 4 is achieved by means of an algorithm applied to the phonetic symbols of the unknown string and of each model stored in the vocabulary.

The preselection consists, as stated, of a comparison of the string of phonetic symbols obtained from the unknown word with the string of phonetic symbols of each word in the vocabulary. A result, the "points" or "score" is produced for each of these comparisons and this quantifies the difference between the unknown string and the individual model. A low score indicates that the model in question is very "similar" to the unknown string whilst a high score indicates that there is a fairly large difference.

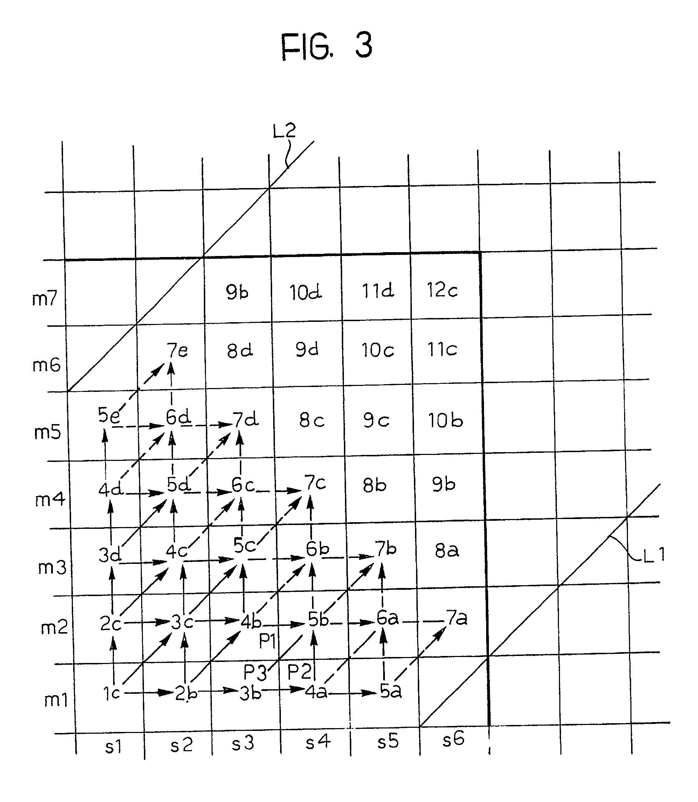

The preselection algorithm can be described graphically with the aid of Figure 3. In this figure, the phonetic symbols $s_i$ of the unknown string to be compared with the models of the vocabulary are shown on the abscissa and the phonetic symbols mi of a model under examination with which the unknown string is being compared are shown on the ordinate. A grid is thus defined which, in Figure 3, has been numbered conveniently starting from the origin, the same number being attributed to squares lying on the same diagonal inclined at an angle of 135° to the abscissa. A respective identification letter has been associated with the number of each space or square on each of the diagonals.

For any square in the grid, which corresponds to a symbol si of the unknown string and a phonetic symbol mi of the model under examination, the algorithm of the invention enables "score" to be calculated from the following equation:

(1) Score = min { (P1 + R($s_i$); P2 + Pv($m_i$) ; P3 + P-($s_i$,$m_i$)}

where

P1 is the score calculated (according to the same equation) for the square immediately to the left in the grid,

P2 is the partial score previously calculated for the square immediately below in the grid,

P3 is the partial score previously calculated for the square immediately below and to the left (diagonally) in the grid,

R($s_i$) is the probability of the "spurious addition" of the phonetic symbol $s_i$ to the unknown string (determined beforehand in known manner),

P($s_i$,$m_i$) is the probability of the "confusion" (determined beforehand in known manner) of the phonetic symbol of the unknown string and the phonetic symbol of the model corresponding to the position of the square under examination, and

Pv($m_i$) is the probability of the "omission" or "cancellation" of the phonetic symbol $m_i$ corresponding to the square under examination; this probability is also determined beforehand by observations and statistics.

Experiments carried out by the inventor and his collaborators have indicated that the results (in terms of the rate of failure to recognise the unknown word) obtained by the application of equation (1) above do not differ appreciably from those which can be obtained when it is assumed, by way of simplification, that R($S_i$) is equal to P($s_i$,$M_i$), that is, with the use of the following equation:

(2) Score = min {(P1 + P($s_i$,$m_i$) ; P2 + Pv($m_i$) ; P3 + P ($S_i$,$m_i$)}

The following description will therefore refer to the application of this simplified equation.

The probabilities P($s_i$,$m_i$) and Pv($m_i$) are stored in memories and the phonetic symbols $m_i$ and $s_i$, as will become clear below, are used as addressing data for accessing the corresponding memory locations.

The values of the cancellation function Pv(mi) depend solely on the phonetic symbols $m_i$ of the model, whilst the values of the confusion function P($s_i$,$m_i$) for each square depend both on the phonetic symbol si of the string and on the corresponding symbol $m_i$ of the model. This latter function indicates the "difference" between the two symbols: the more similar they are, the smaller will be the associated value of the confusion function P($s_i$,$m_i$).

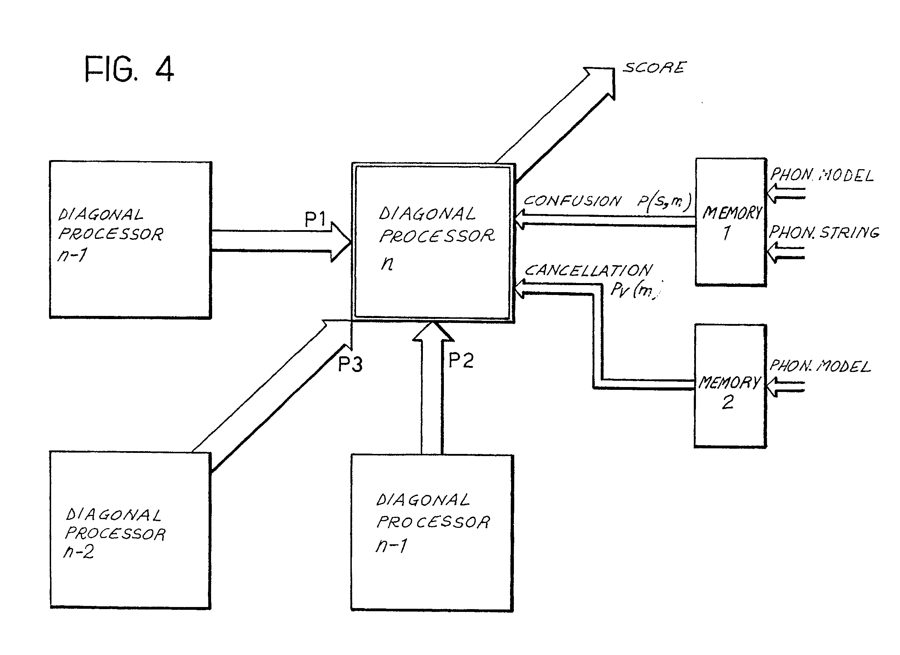

From the above it will readily be understood that the calculation of the score can conveniently be limited to a band of squares near the bisector of the axes, for example the band between the lines $L_1$ and $L_2$ of Figure 3. Since a parameter relating to the similarity between the corresponding phonetic symbols in the unknown string and in the model under examination is calculated for each square of the grid, there is not much sense in calculating similarity scores for phonemes associated with squares remote from the bisector of the axes since one would be evaluating the similarity between phonetic symbols or phonemes which are positioned far apart in the unknown string and in the model respectively. For this reason, with reference to Figure 4, the algorithm is applied only to the squares between the two lines $L_1$ and $L_2$.

The algorithm starts with the calculation of the score (by the equation defined above) for the square 1c of Figure 3. Once the score associated with this square has been calculated, the next step of the algorithm provides for the simultaneous calculation of the scores for the squares 2c and 2b. In the next step, the scores for each of the squares 3b, 3c and 3d are calculated. In each step, the algorithm thus calculates the score for all of the squares on the same diagonal at an inclination of 135° to the abscissa.

If, as in the example of Figure 3, the unknown string consists of six phonetic symbols s1-s6 and the model under examination consists of seven symbols m1-m7, the algorithm is completed by the calculation of the final score for the square indicated 12c in Figure 4. Due to the intrinsic characteristics of the algorithm used, the score calculated for this final square represents the points or score of the difference between the model under examination and the unknown string.

As has been seen with reference to Figure 3, the algorithm provides for the calculation of the final score by passing through an array of squares for each of which a partial score is calculated.

Figure 3 thus suggests the provision of an array of processors in an orthogonal grid, each associated with a square in the plane $s_i$, $m_i$ of Figure 3 and arranged to calculate the score corresponding to the associated square. As shown in Figure 1, for this purpose a processor situated on a diagonal n would receive the scores P1 and P2 from the two adjacent processors situated on the diagonal n-1 and the score P3 from the nearest processor situated on the diagonal n-2. The processor on the diagonal n would then calculate the score on the basis of the values P1, P2 and P3 and the values of the confusion functions $P(s_i,m_i)$ and the cancellation function $Pv(m_i)$ read from memories (indicated "memory 1" and "memory 2" in Figure 4) addressed by the corresponding phonetic symbols of the unknown string and of the model under examination.

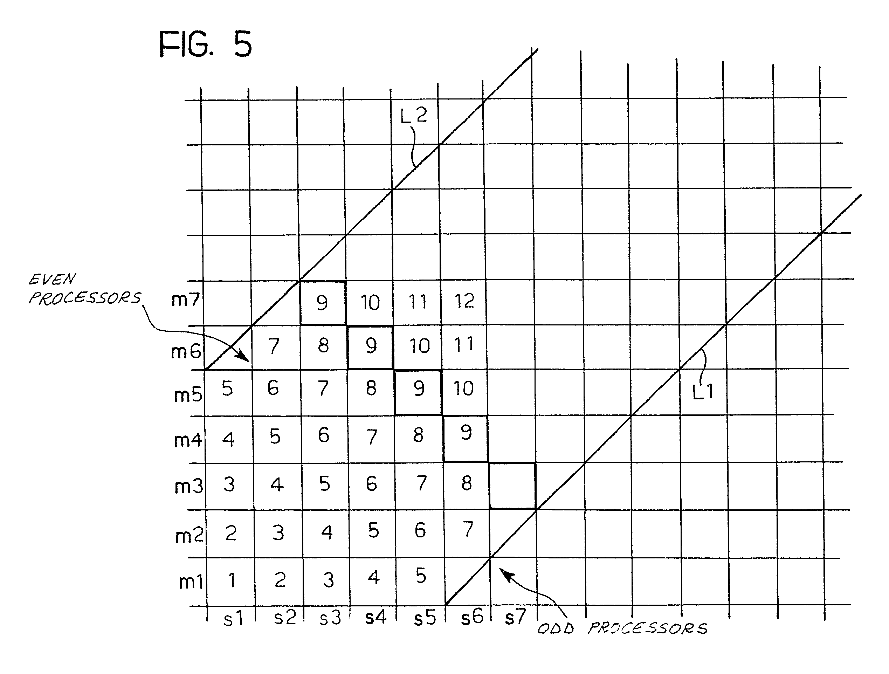

The use of an array of processors, each of which is univocally associated with a square of the grid of Figure 3, however, requires an unnecessarily large number of processors even though the algorithm is applied only to the spaces and squares of a small group, such as the group between the lines $L_1$ and $L_2$ of Figure 3. It is therefore necessary to arrange for the use of a smaller number of processors each being used for more than one calculation. The multiple use of the processors can be achieved in various ways. According to the invention, two groups of processors are used and are associated, for each step of the algorithm, with squares on two different, adjacent diagonals of the grid of Figure 3. The two groups of processors are referred to below as the "odd" processors and the "even" processors respectively since, for each step of the algorithm, they are associated with squares of the grid which are situated on an odd diagonal and an even diagonal respectively, as shown, for example, in Figure 5 with reference to the diagonals 6 and 7.

The use of two groups of processors, an even group and an odd group respectively, enables each processor to be used for 50% of the time: in fact, with reference to Figure 5, whilst the processors associated with the diagonal 6 are calculating the respective scores, the processors associated with the diagonal 7 are waiting to receive the partial scores. At the end of the calculation, the processors associated with the diagonal 6 pass their results to the processors of the diagonal 7 and then wait. The processors associated with the diagonal 7 start their calculations and when these are completed, the processors associated with the diagonal 6 are now associated with the diagonal 8 (and hence always with an even diagonal) and start to calculate the scores associated with the squares on this new diagonal, and so on.

The algorithm thus progresses through successive diagonals and two groups of processors, even and odd, act alternately to calculate the scores relating to the diagonals with which they are associated respectively in each step of the algorithm.

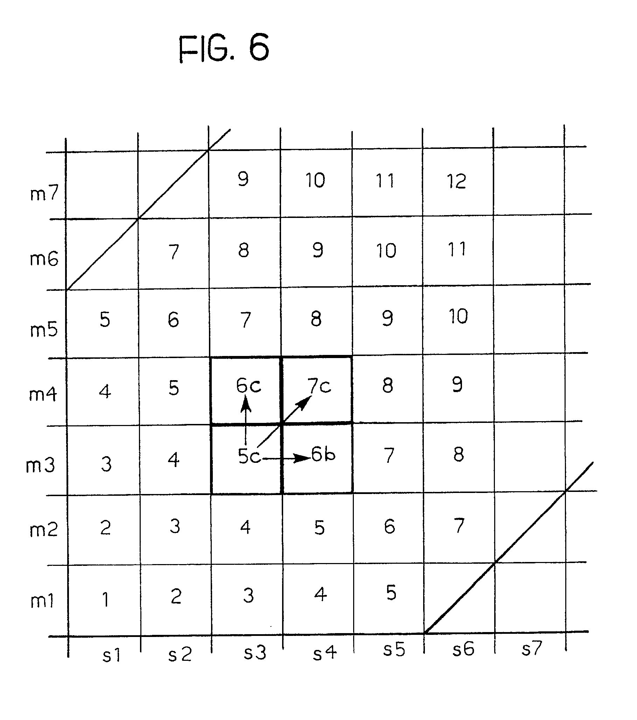

The use of only two groups of processors, even and odd respectively, requires each processor to have a memory capacity for holding the value of the score calculated until the next calculation stage. This can be explained as follows, with reference to Figure 6. Assuming that at a particular instant the processor associated with the square 5c is active and is calculating the corresponding score: at the end of this calculation, the processor supplies the score calculated to the even processors associated with the squares 6c and 6b so that they can carry out their own calculations. When these processors have completed their calculations, the processor previously associated with the square 5c must now calculate the score associated with the square 7c and, for this purpose, must know the partial scores relating to the squares 6c, 6b and 5c. The score relating to the latter square was, however, calculated previously by the same processor. It is thus clear that, in each of its active stages, each processor must calculate the score relating to the square with which it is associated in that stage and must hold that score so as to be able to carry out the calculation relating to a square on a subsequent diagonal in its next active stage.

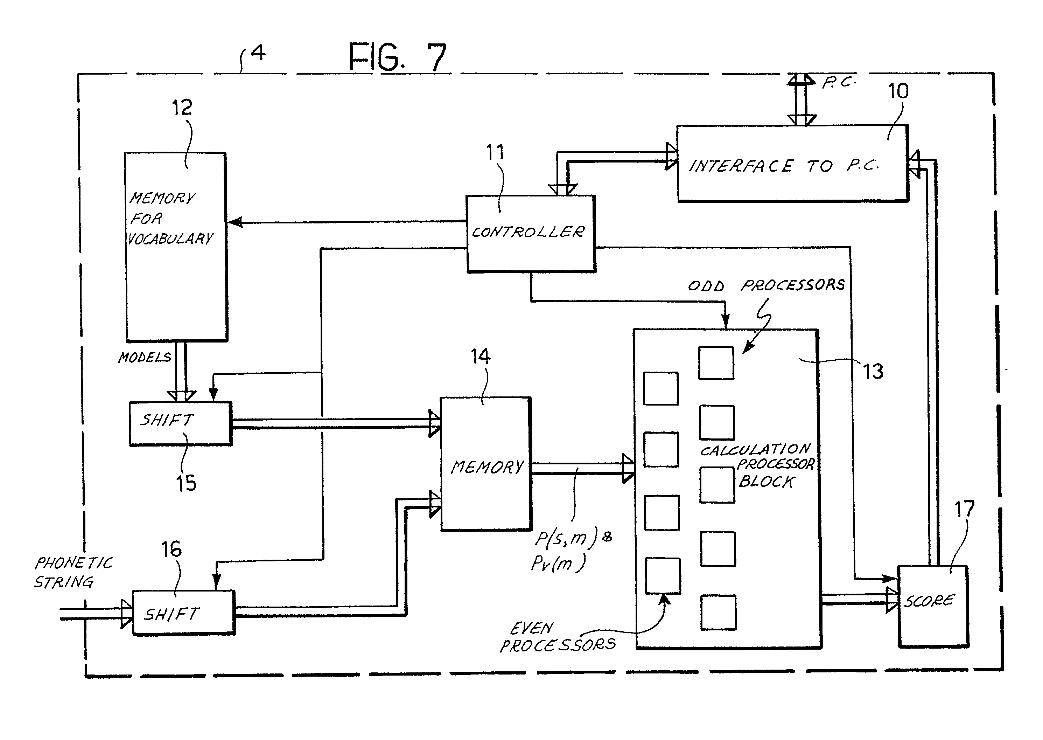

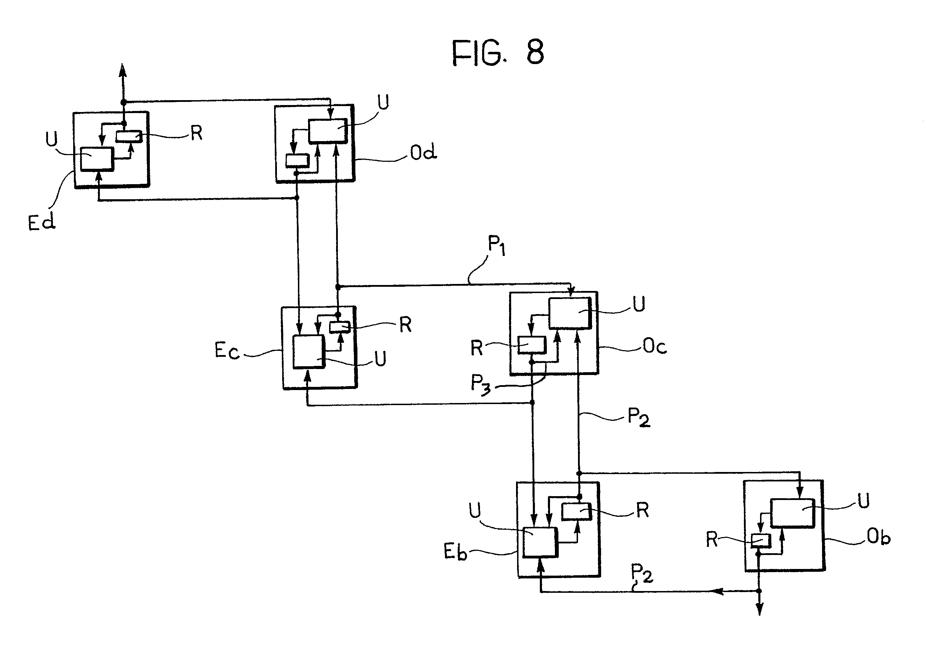

On the basis of the foregoing explanation, the structure adopted by the invention for the board 4 of Figure 2 can now be understood, this structure being illustrated in Figure 7. The structure proposed for each processor in the partial diagram of Figure 8 can also clearly be understood.

With reference to Figure 7, the preselection board 4 includes a device 10 for interfacing with the personal computer 1 and connected to a microprocessor controller 11. The latter is also connected to memory devices 12 in which data indicative of the phonetic symbols representative of all the words in the vocabulary, that is, the symbols constituting all the "models" of the vocabulary, are stored. The controller 11 is also connected to a set of calculating processors 13 including the two groups of processors (even and odd respectively) defined above. The number of processors obviously depends on the width of the band in the plane $s_i$, $m_i$ (Figure 3) to which it is decided to restrict the application of the algorithm.

Further memory devices, in which the values of the functions $P(s_i,m_i)$ and $Pv(m_i)$ defined above are stored in order, are indicated 14. The ordered addressing of the locations of the memory devices 14 is controlled by means of two shift-register memories 15 and 16 in the manner which will be described in more detail below.

The data associated with the phonetic symbols constituting the phonetic models of the vocabulary are loaded into the shift-register memory 15.

The shift-register memory 16, however, receives the data corresponding to the phonetic symbols of the unknown string, constructed, as stated above, by the board 3 (Figure 2).

The set of processors 13 calculates the difference score for each model with respect to the unknown string; the models which have scores exceeding a predetermined threshold are, however, discarded immediately; the scores of the remaining models are stored in a memory indicated 17 in Figure 7, together with respective identification codes.

The personal computer 1 then selects from this memory a predetermined maximum number (for example 20) of models which were attributed the lowest scores in the preceding calculations.

As stated above, with the solution adopted, each processor, whether it is even or odd, must have the capacity to store the score calculated temporarily. The structures of the even and odd processors and their connections thus assume the arrangement illustrated (with an even greater degree of magnification) in Figure 8. This drawing shows, by way of example, three even processors $E_b$, $E_c$, $E_d$ and three odd processors $O_b$, $O_c$, $O_d$. Each of these processors includes a processing and calculating circuit portion, indicated U in each processor, and an output register or memory R for holding the partial score calculated from time to time. Thus, if, for example, at a given time the processor $O_c$ is active, its calculation unit U will receive the data P1 and P2 from the processors $E_c$ and $E_b$ respectively and will retrieve from its own register R the datum $P_3$ previously calculated by the same calculation unit U.

In the diagram of Figure 8, the memory devices associated with the various processors and from which the processors read the values of the functions $P(s_i,m_i)$ and $Pv(m_i)$ have not been shown, for simplicity.

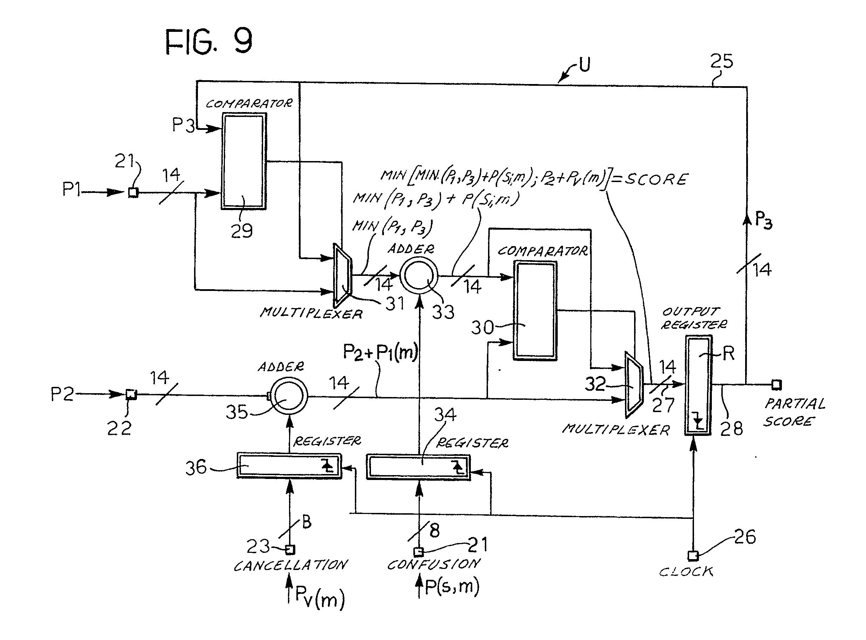

The physical structure of an individual even or odd processor is shown in greater detail in Figure 9. As can be seen in this drawing, the calculation unit U has two inputs 21 and 22 for the data P1 and P2, two further inputs 23 and 24 for the values of the functions $Pv(m_i)$ and $P(s_i,m_i)$ which are read from the corresponding memories (indicated 14 in Figure 3) from time to time, an input 25 connected to the output of the register R and an input 26 for a clock signal.

The output 27 of the unit U is connected to the input of the register R. The output of this register, indicated 28, constitutes the output of the entire processor.

The unit U includes two digital comparators 29 and 30 and associated multiplexers 31 and 32. The comparator 29 compares the data $P_1$ and $P_3$ and correspondingly arranges for the multiplexer 31 to output the smaller of P1 and P3. The value of the function $P(s_i,m_i)$ received at the input 24 and parked in a register 34 is then added to the smaller of PI and $P_3$ in an adder 33.

A second adder 35 adds P2 to the value of the calcellation function $Pv(m_i)$ received at the input 23 and parked in a register 36. The outputs of the adders 33 and 35 are connected to the inputs of the comparator 30 and of the multiplexer 32. The comparator 30 therefore compares the quantities $min(P1,P3) + P(s_i,m_i)$ and $P2+Pv(m_i)$ and arranges for the multiplexer 32 to output the quantity

(3) $min\{min(P1, P3) + P(s_i,m_i); P2+Pv(m_i)\}$ which corresponds to the score according to equation (2) defined above.

This score is stored in the output register R and passed to the adjacent processors for the next calculation.

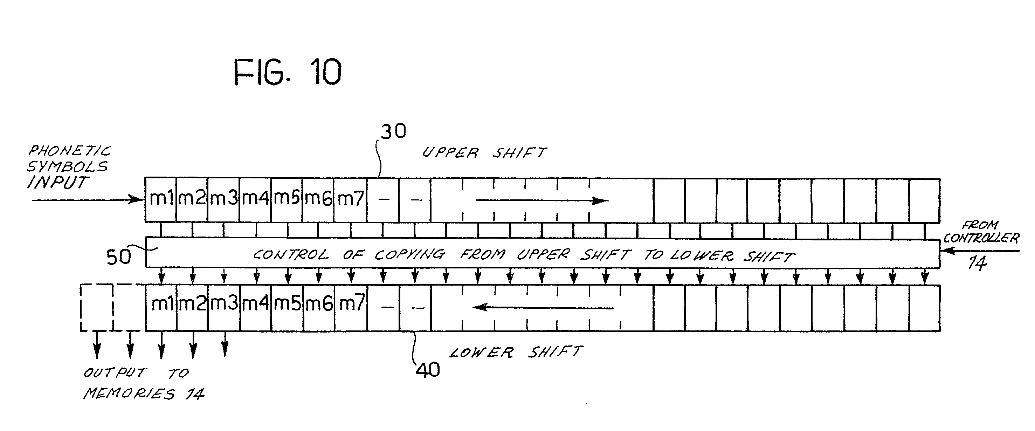

Finally, Figure 10 shows a convenient structure for the shift-register memories indicated 15 and 16 in Figure 7. Each of these memories to advantage comprises a first shift register 30 into which the data relating to the phonetic symbols (of a model in the case of the memory 15, or of the unknown string in the case of the memory 16 of Figure 7) are loaded. The outputs of the shift register 30 are connected to corresponding loading inputs of a second shift register 40 by means of a control device 50 piloted by the controller indicated 11 in Figure 7.

Each memory device 15 or 16 therefore has a structure including two shift registers: the phonetic symbols of the model or of the string under examination are initially transcribed and held in the first register. These symbols are transcribed in order into the lower register 40. After transcription, the symbols in the latter register are shifted in order so as to allow the addressed accessing of the locations in the memory devices 14 where the values of the functions $P(s_i, m_i)$ and $Pv(m_i)$ are held during the execution of the algorithm described above. Once the symbols have been transcribed into the lower register 40, the symbols relating to the model or string to be used in the next processing cycle can be loaded into the upper register 30. In this way it is possible to speed up particularly the loading into the memory 15 of the symbols of the phonetic models taken from the vocabulary memory 12.

The double shift-register structure is also convenient for the memory 16 since it avoids problems resulting from the fact that the unknown strings do not necessarily all have the same length, that is the same number of phonetic symbols.

If it is wished further to accelerate the loading of the models from the vocabulary memory 12 into the addressing memory 15, it is possible to arrange for the upper register 30 of the latter memory to load two models at a time for each clock signal. This measure doubles the loading speed although it also involves a doubling of the number of parallel lines required for presenting the phonetic symbols to the shift registers.

## Claims

1. A method for recognising isolated words spoken by a speaker, particularly for very large vocabularies, including the preliminary steps of:
determining and storing, for each word in the vocabulary, at least one corresponding "phonetic model" constituted by a sequence of phonetic symbols of a pre-defined phonetic alphabet, corresponding to the phonemes of the word;
determining and storing, for each of a predetermined limited set of basic phonemes or prototypes spoken by the speaker, the associated values assumed by predetermined characteristic parameters indicative of the energy and spectral composition of that phoneme;
the method then including, each time it is carried out, the steps of:
generating an electrical signal corresponding to each isolated word spoken by the speaker;
sampling the electrical signal and determining the values assumed by the characteristic parameters for each sample;
comparing the corresponding values of the characteristic parameters of each sample with the previously-stored values of the basic phonemes or prototypes,
determining, on the basis of this comparison, a sequence or "string" of phonetic symbols constituting an approximate representation (optimised according to a predetermined criterion) of the phonemes contained in the isolated word spoken, and
comparing the phonetic string with all the phonetic models of the vocabulary and selecting, by means of a dynamic programming algorithm, a small number of models ("candidate" models) whose characteristics best correspond to those of the "string".

2. A method according to Claim 1, in which the measurement or score is calculated according to a predetermined function of
- the probability of the substitution or confusion of one phonetic symbol with another, this probability being determined beforehand on the basis of a survey of the statistical frequency with which each phonetic symbol is confused with each of the other phonetic symbols, for the words of a predefined data-base, the probability of the omission or cancellation of each phonetic symbol, this probability being determined beforehand on the basis of a survey of the statistical frequency with which an omission or loss of each phonetic symbol occurs for the words of a predefined data-base, and
- the probability of the spurious addition of a phonetic symbol to the unknown string, determined beforehand on the basis of a survey of the statistical frequency with which the accidental addition of each phonetic symbol occurs for the words of a predefined data-base.

3. A method according to Claim 2, in which the probability of the spurious addition of a symbol to the phonetic string is assumed to be equal to the probability of substitution or confusion relating to that symbol.

4. A method according to one of the preceding claims, in which the phonetic model of each word in the vocabulary is determined by means of rules defined on the basis of the written representation of the word.

5. A method according to one of the preceding claims in which a graphic representation of the string constructed is generated and displayed.

6. A method according to one of the preceding claims, in which a smaller number of models is selected from the candidate models on the basis of an accurate phonetic analysis of the candidate models with reference to the characteristics of the electrical signal representative of the unknown word.

7. Equipment for recognising isolated words spoken by a speaker, particularly for very large vocabularies, comprising:

first memory means (14) for storing, for each word in the vocabulary, data indicative of at least one corresponding phonetic model constituted by a sequence of phonetic symbols, of a predefined phonetic alphabet, corresponding to the phonemes of the word;

second memory means (3) for storing data indicative of the values assumed by predetermined parameters characteristic of each of a predetermined limited set of basic phonemes or prototypes spoken by the speaker beforehand

generator means (5) for generating an electrical sound signal corresponding to an isolated word spoken by the speaker,

sampling means (2) for sampling the sound signa

signal-processing means (2) for determining the values assumed by the characteristic parameters for each sample of the sound signal,

first processing and comparator means (3) for comparing the corresponding values of the characteristic parameters of each sample with the previously-stored values for the basic phonemes or prototypes and determining, on the basis of these comparisons, the composition of a sequence or "string" of phonetic symbols constituting an approximate representation of the phonemes contained in the isolated word spoken; and

second preocessing and comparison means (4) for comparing the phonetic string with all the phonetic models of the vocabulary and selecting, by means of a dynamic programming algorithm, a small number of the phonetic models whose characteristics correspond best with those of the string.

8. Equipment according to Claim 7, in which the processing and comparison means (4) comprise two groups of processors (E; O) for calculating the points or scores relating to corresponding predetermined sets of pairs of symbols ($s_i$, $m_i$) of the string and of a model, in alternating steps.

9. Equipment according to Claim 8, in which each processor (E; O) of one group has the same structure as each processor (O; E) of the other group.

10. Equipment according to Claim 9, in which each processor of a group comprises a digital processing and calculating unit (U) connected to two adjacent processors of the other group; the processing and calculating unit (U) being provided with a respective memory unit (R) for holding the result of a processing step until the next processing step.

11. Equipment according to Claim 10, in which each processor comprises

first comparator means (29, 31) for determining and outputting the smaller of two input data (P1, P3);

a first adder (33) for adding a datum to the datum output by the first comparator means (29, 31);

a second adder (35) for adding a datum to a further input datum (P2);

second comparator means (30, 32) for determining and outputting the smaller of the data output by the first and second adders (33, 35), and

a memory register (R) connected to the output of the second comparator means (30, 32).

12. Equipment according to Claim 11, in which each of the first and second comparator means (29, 31; 30, 32) comprises a digital comparator (29, 30) and a multiplexer (31; 32).

13. Equipment according to one of Claims 7 to 12, formed with the use of a personal computer (1) provided with at least one dedicated circuit board (2 to 4).

14. Equipment according to the preceding claims, including display means (6) for presenting the user with graphic representations relating to the string constructed and/or to the models selected.

FIG. 2

VOICE INPUT → 

·SIGNAL ACQUISITION
·AMPLIF + FILTR.
·SAMPLING +
 A/D CONVERSION      A

·SIGNAL PROCESSING
 B
·LABELLING
 OF FRAMES

SPEAKER-DEPENDENT PHONETIC PROTOTYPES    a

STRING

DISPLAY
 C1

PHONETIC STRING CONSTRUCTION    C

PHONOLOGICAL CHARACTERISTICS OF THE LANGUAGE    b

STRING

PRESELECTION FROM VOCABULARY    D

CANDIDATE MODELS

VOCABULARY    d

ACCURATE PHONETICAL ANALYSIS 2ND LEVEL SELECTION    E

ENERGY PHENOMENA ASSOCIATED WITH THE PHONETIC EVENTS    e

DICTATION

SELECTED CANDIDATE(s)

PHRASE RECOGNISED    CONTEXTUAL ANALYSIS    F

PROBABILITY MODEL OF THE LANGUAGE    f

P.C. (HOST)    1
APPLICATION OF THE OPERATING SYSTEM

5    6

2a
2b

SIGNAL ACQUISITION AND PROCESSING    2

STRING CONSTRUCTION    3
ACCURATE PHONETICAL ANALYSIS
CONTEXTUAL ANALYSIS

PRESELECTION    4

EP 0 420 825 A2

# FIG. 3

FIG. 4

FIG. 5

EVEN PROCESSORS

ODD PROCESSORS

L1

L2

EP 0 420 825 A2

# FIG. 6

FIG. 7

FIG. 8

# FIG. 9

$$MIN\left[MIN.(P_1,P_3)+P(S_im);P_2+P_V(m)\right]=SCORE$$
$$MIN(P_1,P_3)+P(S_im)$$
$$MIN(P_1,P_3)$$

$P_2+P_1(m)$

COMPARATOR
P3
29

P1 → 21 14

MULTIPLEXER 31

ADDER 14 33

COMPARATOR 30

OUTPUT REGISTER 32 14 27 R

MULTIPLEXER

PARTIAL SCORE 28

U 25

P3 14

P2 → 22 14 ADDER 35 14

REGISTER 36

REGISTER 34

B 23 CANCELLATION ↑Pv(m)

8 21 CONFUSION ↑P(s,m)

26 CLOCK

EP 0 420 825 A2

EP 0 420 825 A2

# FIG. 10

PHONETIC
SYMBOLS
INPUT

30

UPPER SHIFT

| m1 | m2 | m3 | m4 | m5 | m6 | m7 | – | – |  |

50

CONTROL OF COPYING FROM UPPER SHIFT TO LOWER SHIFT

FROM
CONTROLLER

14

| m1 | m2 | m3 | m4 | m5 | m6 | m7 | – | – |  |

LOWER SHIFT

OUTPUT TO
MEMORIES 14

40